# EUROPEAN PATENT APPLICATION

(11) **EP 4 759 472 A1**
(43) Date of publication of application: **17.06.2026**
(21) Application number: 24220186.1
(22) Date of filing: 16.12.2024
(51) Int. Cl.: B23K 26/082, B23K 26/352, G02B 26/10

(54) **SYSTEM FOR MARKING PRODUCTS WITH A LASER, USE THEREOF AND A METHOD OF MARKING A PRODUCT WITH A LASER**

(71) Applicant: Dover Europe Sàrl, 1214 Vernier (CH)
(72) Inventor: Giemza, Maciej, Warszawa (PL)
(74) Representative: Rybarczyk, Dariusz Pawel

(57) **Abstract**

The present invention relates to a system for marking products with a laser, comprising a laser source (21, 31, 41) for generating a laser beam and a laser beam guidance system comprising a fast-scanning deflector (22, 32, 42), a first controllable deflector (23, 33, 43), a second controllable deflector (24, 34, 44) and at least one lens (25, 35, 45) which define an optical path for directing the laser beam generated by the laser source (21, 31, 41) to a product to be marked, and which guide the incident laser beam over the product surface along two directions (X, Y) thereof. The fast-scanning deflector (22, 32, 42) is configured for fast scanning the incident laser beam along a first direction (X). The first controllable deflector (23, 33, 43) is configured for positioning the incident laser beam along the first direction (X). The second controllable deflector (24, 34, 44) is configured for positioning and scanning the incident laser beam along a second direction (Y). The system comprises furthermore a control unit for controlling the operation of the system components.

The present invention relates also to a method of marking a product with a laser, the method comprising generating a laser beam from a laser source; directing the laser beam to the product and guiding the incident laser beam over a product surface in two axes (X, Y) thereof with a laser beam guidance system comprising a fast-scanning deflector (22, 32, 42), a first controllable deflector (23, 33, 43), a second controllable deflector (24, 34, 44) and at least one lens (25, 35, 45) defining an optical path for the laser beam. Guiding the laser beam comprises positioning the incident laser beam in a starting position along a first direction (X) with the first controllable deflector, and along a second direction (Y) with the second controllable deflector; fast scanning the incident laser beam along the first direction (X) with the fast-scanning deflector a required number of times to mark the product, wherein the position of the incident laser beam being shifted along the second direction (Y) with the second controllable deflector for each subsequent fast scan, until a marking or part thereof is completed; repeating the above steps for each subsequent marking or part thereof.

The present invention relates also to use of the system according to the invention.

## Description

The present invention relates generally to a system and a method for marking products with a laser, and in particular to a system and a method for marking products with a laser that use a fast-scanning deflector enabling faster marking process. The present invention relates also to use of the system for the marking of products.

In the field of product marking there is a desire to increase marking rates. Furthermore, two-dimensional (2D) codes such as QR codes are becoming increasingly popular and accepted as a solution for encoding data on products in a robust way that is resistant to damage. Products carrying 2D codes are almost universally used in all branches of the packaging and labelling industry. With the universal implementation come even higher requirements for increasing productivity rates.

Furthermore, the GS 1 body is preparing a new approach to 2D codes including a new standard and digital link approach. With this changes, the 2D code will replace barcode marking on many products and will become even more popular. To conserve productivity rates of current production lines would require 2D printing with times similar to current fastest plain text messages. Due to the above trends and expected future needs and requirements, solutions are being sought that would enable an increase in the speed of product marking.

One technique of product marking involves the use of a laser source generating a laser beam that is directed at the product to be marked using two position-controlled mirrors and a lens, which form successive elements of an optical path for the laser beam. The position control of the mirrors is performed by so called galvoscanners or "galvos" in short, which use motors or other driven elements for adjusting the angles of the mirrors (typically rotate them) so as to collectively control the location on the product where the beam is desired to be projected. The galvos and corresponding mirrors form galvo sets responsible for moving the incident laser beam along X and Y directions over the product surface, and are referred to as X-mirror/X-galvo and Y-mirror/Y-galvo, respectively. As a result, the incident laser beam is swept over the product surface and in combination with the synchronized operation of the laser source marks the product according to a predetermined pattern.

The above-described technique is, however, limited in terms of marking speed and efficiency.

Taking into consideration the above, there is a need in the art for an improved system and method for marking products.

The above-mentioned need is fulfilled by a system defined in independent claim 1 and a method defined in independent claim 13.

The present invention provides a system for marking products with a laser, comprising a laser source for generating a laser beam; and a laser beam guidance system comprising a fast-scanning deflector, a first controllable deflector, a second controllable deflector and at least one lens which define an optical path for directing the laser beam generated by the laser source to a product to be marked, and which guide the incident laser beam over the product surface in two directions thereof. The fast-scanning deflector is configured for fast scanning the incident laser beam along a first direction, the first controllable deflector is configured for positioning the incident laser beam along the first direction; the second controllable deflector is configured for positioning and scanning the incident laser beam along a second direction. The system furthermore comprises a control unit for controlling the operation of the system components.

In one implementation of the system, the first controllable deflector and/or the second controllable deflector is a galvo scanner. The galvo scanner is typically embodied as a mirror controlled by a galvo motor which allows for fast and precise positioning, e.g. rotating, of the mirror to deflect laser beams.

In another implementation of the system, the fast-scanning deflector is a resonant galvo scanner. The resonant galvo scanner is a specific type of the fast-scanning deflector which, when set in resonant motion, oscillates at high frequency enabling very fast scanning of a laser beam. In the context of the present invention, the resonant galvo scanner can be also referred to as a resonant scanner or using similar terminology. Typically, a resonant galvo scanner comprises a mirror mounted on a resonant galvo or resonant motor.

In still another implementation of the system, the fast-scanning deflector is a polygon scanner. The polygon scanner is a specific type of the fast-scanning deflector and has the form of a rotating body with a series of reflecting surfaces or facets on its side part. After the high speed of rotation is provided, the reflective surfaces or facets of the polygon scanner reflect the laser beam one after another, enabling a very high scanning speed of the laser beam. Typically, a polygon scanner comprises a multifaceted mirror mounted on bearings and rotated by a motor in a single direction.

In still another implementation of the system, the fast-scanning deflector is an electro- or acousto-optic modulator. The electro- or acousto-optic modulator is a specific type of the fast-scanning deflector implemented as an optical body, through which the laser beam is passed. As a result of high frequency modulation, optical properties of the modulator change and the output laser beam is deflected at high speed. Modulators utilise an electro or acousto-optic effect, i.e. the modification of the refractive index of a material (usually a transparent crystal or glass) by the oscillating mechanical strain of a sound wave or electric field. The fast-scanning deflector may comprise any deflector capable of moving the beam through the max scan angle with a frequency greater than, 2 KHz, 4 KHz, 8 KHz, 10 KHz, 12 KHz, 25KHz, 50KHz, 100 KHz, 500KHz, or 1MHz. These frequencies may be achieved whilst moving the deflector through an angle exceeding 1°, 5°, 10°, 15°, 20°, 25° or 30°. In particular, the fast-scanning deflector may have a frequency of greater than 2 KHz, 4 KHz or 8 KHz when moving through an angle of 10° or greater. In particular, the fast-scanning deflector may have a frequency of greater than 4 KHz, 8 KHz, or 12 KHz when moving through an angle of 5° or greater. In particular, the fast-scanning deflector may have a frequency of greater than 25 KHz, 100 KHz, or 500 KHz when moving through an angle of 1° or greater.

The fast-scanning deflector may comprise any deflector capable of deflecting a laser beam with a maximum scan angle greater than 0.1°, 1°, 5°, 10°, 15°, or 20°. The fast-scanning deflector may comprise any deflector capable of deflecting a laser beam with a maximum scan angle greater than 0.1°, 1°, 5°, 10°, 15°, or 20°. The fast-scanning deflector may comprise any deflector capable of deflecting a laser beam with a maximum scan angle not exceeding 30°, 25°, 20° or 10°.

In the case of a polygon scanner, one face passing through the laser beam may be considered as equivalent to a single cycle. Therefore, the revolutions per minute (RPM) of the polygon scanner can be converted to an equivalent frequency by multiplying the RPM by the number of polygon mirror facets and converting minutes to seconds. For example, an 8 faceted polygonal mirror rotating at 60,000 RPM will have an equivalent frequency of 8 KHz.

A fast-scanning deflector may be considered to be any of a resonant galvo scanner, a polygon scanner, an electro- or acousto-optic modulator.

In still another implementation of the system, the laser source is a pulse-on-demand laser. The pulse-on-demand laser is able to provide a sequence laser pulses at high frequency with variable delays between the individual pulses.

In still another implementation of the system, the frequency of laser pulses generated by the pulse-on-demand laser is synchronised with deflection of the fast-scanning deflector by the control unit. Such synchronisation ensures that laser pulses are generated by the laser source when the fast-scanning deflector is aligned to direct the laser pulse where a mark is required. This avoids possible distortion of the resulting marking resulting from the movement of the fast-scanning deflector. The movement of the fast-scanning deflector may comprise moving with a variable speed, wherein the speed of movement varies throughout one movement cycle. In particular, variable movement speed may refer to sinusoidal movement speed.

Alternatively, the system may comprise a fixed-pulse laser source that generates laser pulses with a constant frequency. This system may be used with electro- or acousto-optic modulators amongst others.

In still another implementation of the system, one or more products to be marked are transported on a conveyor, and wherein the first controllable deflector and/or the second controllable deflector is configured to compensate for the movement of the product on the conveyor along respective one or both axes. The system may comprise a product movement sensor. The product movement sensor may detect movement of the product on the conveyor.

In still another implementation of the system, the fast-scanning deflector comprises a fast scan position detector configured to provide a fast-scanning deflector position signal to the control unt. In some embodiments, the position detector may comprise one or more of an encoder, a laser and photodiode array and/or a position signal may be generated by the fast-scanning deflector.

In still another implementation of the system, the control unit is configured to control the frequency of laser pulses generated by the pulse-on-demand laser based on the fast-scanning deflector position signal.

In still another implementation of the system, the first and/or second controllable deflector may comprise a position detector. In some embodiments, the position detector may comprise one or more of an encoder, a laser and photodiode array and/or a position signal may be generated by the first and/or second controllable deflector. In still another implementation of the system, the control unit is configured to generate control signals based on a position signal from one or more position detectors associated with the first and/or second controllable deflector.

The present invention relates also to use of the system of the present invention for the marking of products. Optionally, the products are marked with a 2D barcode or QR code.

The present invention may be operable to mark a 24-pixel line at a length of 100 mm in 80, 40, 20 or 10 milliseconds or less. The present invention may be able to mark a product with a 24x24 pixel QR code with an overall size of 7 x 7 mm in a time of 15, 10, 5, 3, 2, or 1 milliseconds or less. In some embodiments, the system may achieve line speeds equivalent to the frequency of the fast-scanning deflector.

The present invention provides also a method of marking a product with a laser, the method comprising generating a laser beam from a laser source and directing the laser beam to the product and guiding the incident laser beam over a product surface in two axes thereof with a laser beam guidance system comprising a fast-scanning deflector, a first controllable deflector, a second controllable deflector and at least one lens defining an optical path for the laser beam. Guiding the laser beam comprises positioning the incident laser beam in a starting position along a first direction with the first controllable deflector, and along a second direction with the second controllable deflector, fast scanning the incident laser beam along the first direction with the fast-scanning deflector a required number of times to mark the product, wherein the position of the incident laser beam being shifted along the second direction with the second controllable deflector for each subsequent fast scan, until a marking or part thereof is completed, and repeating the above steps for each subsequent marking or part thereof.

The product may be marked following absorption of the laser output by the material of the product. Marking may occur via photothermal or photolytic changes in the material of the product. Marking may comprise inducing one or more of etching, engraving, ablation, foaming, carbonisation, photobleaching, amongst others. Marking of the present invention may provide a surface readable mark on a product. The change in the product may be superficial and confined to the surface of the product only. It may be distinguished from laser fabrication methods which cuts, or removes material substantially, altering the shape or bulk mechanical properties of a substrate.

In one implementation of the method, the laser beam is generated as a series of laser pulses.

In another implementation of the method, the fast scanning with the fast-scanning deflector is performed with non-linear movement speed, optionally sinusoidal movement speed.

In still another implementation of the method, the frequency of pulses generated by the laser source is synchronised with the non-linear movement speed of the fast-scanning deflector.

In still another implementation of the method, the frequency of pulses generated by the laser source is synchronised with the non-linear movement speed of the fast-scanning deflector based on a fast-scanning deflector position signal.

In still another implementation of the method, the fast-scanning deflector position signal is generated by a fast scan position detector.

In still another implementation, the method is for producing 2D barcodes or QR codes on a product.

In an implementation, the method is for marking a product comprises paper and other cellulosic materials, metals (non-limiting examples include aluminium and steel, and may be in the form of foils or metalized films, beverage containers, bottle tops amongst others), polymers (non-limiting examples include PP, PE, PA, PET) or inorganic materials (non-limiting examples include glass, ceramics and semiconductors). The product may also be referred to as the substrate or an object herein. Products, substrates or objects may include consumer goods, primary and secondary packaging materials, amongst others. Marking may be by surface ablation, thermal pitting, foaming or charring of the substrate surface or discolouring of the surface of the substrate. The marking may comprise codes, text (non-limiting examples include serial numbers, URL addresses and dates), logos, images and product tracking ID amongst others. Codes may include 1D and 2D codes, including but not limited to barcodes and QR codes. The mark or marking created by the present invention may alternatively be referred to as content herein.

It is to be noted that the term "fast-scanning deflector" or "fast scanner" and similar terms are to be understood in the context of the present invention as enabling relatively higher operating speed than the classic galvos or galvanoscanners (also referred to as "controllable deflectors" in the present disclosure) known in the prior art and used for beam positioning. In the same context, the mentioned classic galvos or galvanoscanners are also sometimes referred to as "slow" galvos or scanners to indicate that they operate at relatively lower speeds in comparison to the fast-scanning deflectors or scanners. Higher performance classic galvos can move through a scanning angle of 10° or less with a frequency of 1 KHz or less when operating with a sine wave. Most classic galvos operate with a frequency far below this. They typically comprise a single motor connected to a bearing mounted shaft and a mirror on the shaft. The motor moves the single mirror back and forth through the scanning angle.

Further features and advantages of the present invention will become apparent after reading a more detailed description presented below in connection with the attached drawing, in which:
- Fig. 1: shows an exemplary content to be marked on products;
- Fig. 2a: shows a prior art system for marking products with a laser;
- Fig. 2b: shows an operation scheme followed by the prior art system from Fig. 2a for marking the content shown in Fig. 1 on the surface of a product;
- Fig. 3a: shows an embodiment of a system for marking products with a laser according to the present invention;
- Fig. 3b: shows an operation scheme followed by the system from Fig. 3a for marking the content shown in Fig. 1 on the surface of a product;
- Fig. 4: shows another embodiment of a system for marking products with a laser according to the present invention;
- Fig. 5: shows another embodiment of a system for marking products with a laser according to the present invention;
- Fig. 6: shows a control scheme implemented by a control unit in the system according to the present invention;
- Fig. 7: shows a flowchart representing a process for controlling the operation of the system according to the present invention.

### DETAILED DESCRIPTION

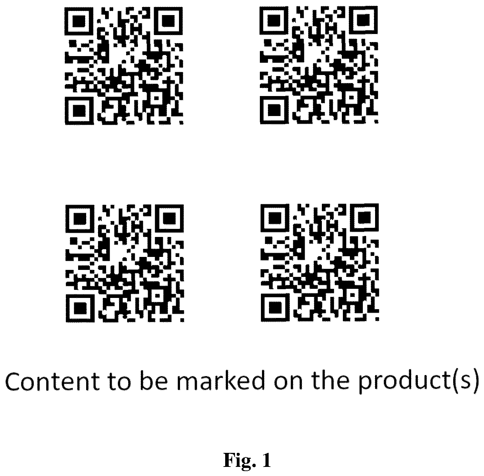

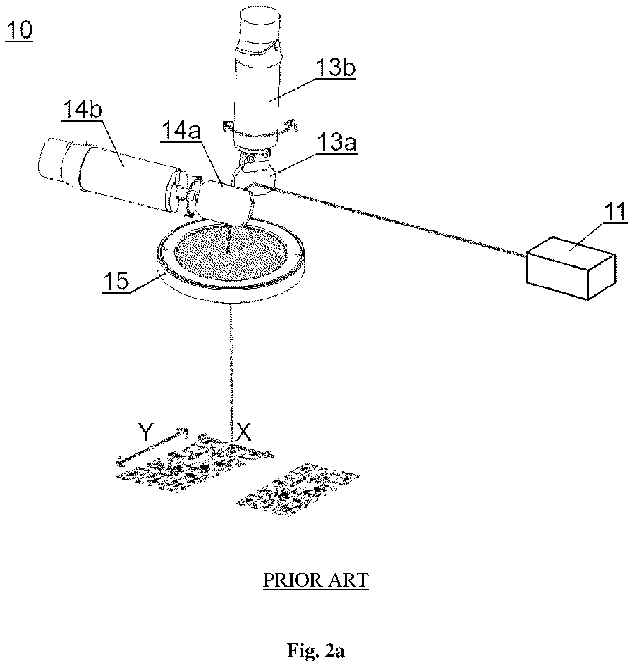

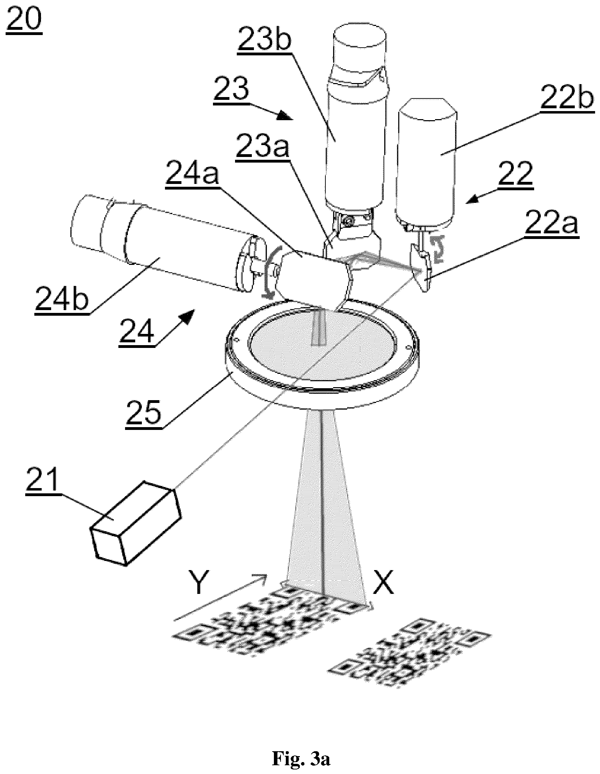

Fig. 1 shows an exemplary content to be marked on products that consists of four codes in the form of QR codes arranged in two rows with two codes in each row, at a certain distance from each other. These markings will be used as a reference for explaining the difference in operation between a prior art system shown in Fig. 2a, and a system according to the present invention shown in Figs. 3a, 4 and 5. It is to be noted that the presented QR codes are only illustrative and non-limiting examples of 2D codes which in general may include any form of two-dimensional marking that can be applied to a product with a laser, including logos, barcodes, text characters etc.

Fig. 2a shows a prior art system 10 for marking products with a laser. The system 10 comprises a laser source 11, a first mirror 13a, an X-galvo 13b, a second mirror 14a, a Y-galvo 14b and a scanning lens 15. The laser source 11 produces a laser beam which is projected onto the first mirror 13a controlled by the X-galvo 13b by rotating it as indicated by the arrow, then the laser beam reflected by the first mirror 13a is directed to the second mirror 14a controlled by the Y-galvo 14b by rotating it as indicated by the arrow, which in turn reflects the laser beam and directs it through the scanning lens 15 to a surface of a product to be marked. As also explained earlier in the introductory part, the incident laser beam is swept over the product surface in X and Y directions by the movement of the respective galvos 13b, 14b and in combination with the synchronized operation of the laser source 11 marks the product according to a predetermined pattern.

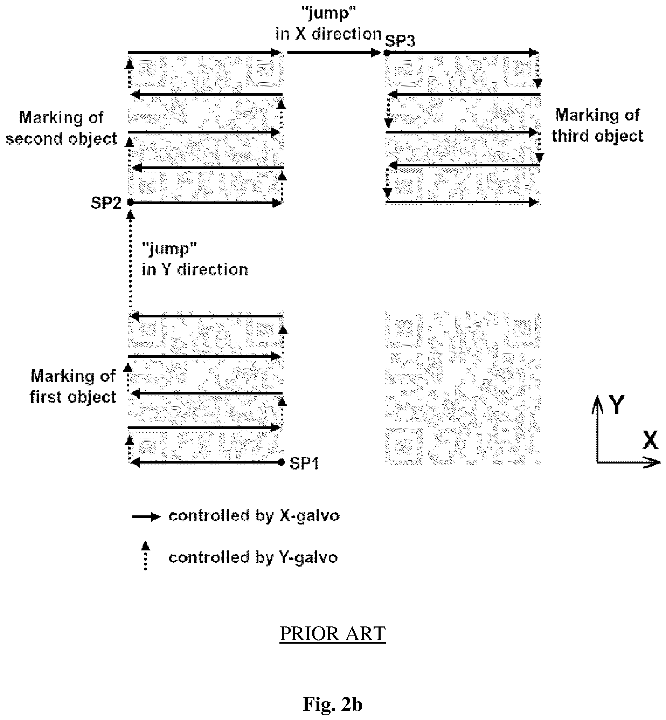

Fig. 2b shows a typical operation scheme followed by the prior art system from Fig. 2a for marking the content as shown in Fig. 1 on the surface of a product. The sequence of arrows in Fig. 2b illustrates, in a simplified and very schematic manner, consecutive movements of the incident laser beam over the product surface. X and Y directions of the surface to be marked are defined as vertical and horizontal directions, respectively (as seen in a direction perpendicular to the surface). Movements along the X direction are implemented by the X-galvo 13b, whereas movements along the Y direction are implemented by the Y-galvo 14b. Starting from the first code, i.e., the lower left QR code, the position of the incident laser beam is set in a starting position SP1 (bottom right corner of the first code, i.e., the first QR code). Next, marking with laser is done line by line so that after each marking along the X direction with the laser beam guided by the X-galvo 13b (as indicated by the solid line), there is a shift in the Y direction by the Y-galvo 14b (as indicated by the dotted line), and marking is repeated along the X direction with the laser beam guided by the X-galvo 13b, but in the reverse direction. The operation of the laser is synchronised with the operation of the galvos such that the laser beam is delivered for the spots to be marked and ceased for the spots which are not to be marked as well as during positioning (including "jumps"). The above sequence continues until the first QR code is completed. Thereafter, the Y-galvo 14b performs a "jump" in the Y direction to a starting point SP2 of the second code, i.e. next QR code to be marked. The explained process is repeated for the second QR code, and then, after a "jump" in the X direction to a starting point SP3 performed by the X-galvo 13b, also for the third QR code, and so on for one or more remaining codes. It is obvious that the number of lines shown in the figure is greatly reduced for simplicity and that in the actual implementation it will be necessary to perform a much larger number of sequences. It is also obvious that the presented sequence of movements is only exemplary and could be modified or optimised. However, in any case, the movements in the X direction and in the Y direction in the case of the traditional prior art system 10 will always be implemented by the X-galvo 13b and the Y-galvo 14b, respectively, each of which is responsible for moving the laser beam along one direction. In other words, the same set of galvos is responsible for both marking the product and positioning the incident laser beam on its surface. As more than one code remains within the motion range of the galvos 13b, 14b, a certain amount of time is consumed on marking the codes and jumping from one code to the next with the use of traditional galvos. Such solution has low efficiency when considering mass marking of products.

The inventors unexpectedly found that it is possible to significantly accelerate product marking, as explained below with reference to Figs. 3a, 3b, 4 and 5 presenting embodiments of the present invention.

Fig. 3a shows a first embodiment of a system 20 for marking products with a laser according to the present invention. The system 20 comprises a laser source 21, a deflector 22a, a resonant galvo 22b, a first deflector 23a, an X-galvo 23b, a second deflector 24a, a Y-galvo 24b and a scanning lens 25. The deflector 22a and the resonant galvo 22b together make a resonant galvo scanner 22. The first deflector 23a and the X-galvo 23b together make a first controllable deflector 23. The second deflector 24a and the Y-galvo 24b make a second controllable deflector 23. The laser source 21 produces a laser beam which is projected onto the deflector 22a controlled by the resonant galvo 22b, wherein the laser beam reflected by the deflector 22a of the resonant galvo scanner 22 is directed to the first deflector 23a controlled by the X-galvo 23b by rotating it, then the laser beam reflected by the first deflector 23a is directed to the second deflector 24a controlled by the Y-galvo 24b by rotating it as indicated by the arrow, which in turn reflects the laser beam and directs it through the scanning lens 25 to a surface of a product to be marked. The fast-scanning deflector 22, the first and second controllable deflectors, 23, 24 and the scanning lens 25 are also collectively referred to as "laser beam guidance system" in the present disclosure. The laser beam guidance system is designed to direct the laser beam generated by the laser source 21 to the product to be marked in a desired location thereof and to guide the incident laser beam over the product surface along two directions X, Y thereof as a result of controlling the positions of the deflectors.

The role of the introduced fast-scanning deflector embodied in Fig. 3a as the resonant galvo scanner 22 composed of the deflector 22a and the resonant galvo 22b controlling its position is to provide fast sweeping of the incident laser beam over the product surface in X direction, as shown in the figure.. This type of deflector uses a controlled resonance which allows for very fast sinusoidal swings of the mirror, much faster than a classic galvo system is capable of. This in turn allows for faster scanning of the requested field while simultaneously disallowing arbitrary scan path. As the resonant galvo 22b is capable to operate sinusoidally with high frequencies, it can provide very high speed of marking by oscillating the deflector through an angle at a high frequency. The resonant galvo scanner may oscillate through an angle of from 0.1° to 30°, or from 5° to 25° or from 10° to 20° or any range formed from any of these end points. In particular, the resonant galvo scanner may oscillate with a frequency of from 2 KHz to 40 KHz, or from 4 KHz to 30 KHz, or from 8 KHz to 25 KHz or from 10 KHz to 20KHz, or any range formed from any of these endpoints. The remaining galvo sets in the system 20 according to the present invention cooperate with the fast-scanning deflector 22. The first deflector 23a controlled by the X-galvo 23b provides positioning along the X direction, which can also by referred to as "slow" positioning when compared to the fast-scanning set. The second deflector 24a controlled by the Y-galvo 24b provides "slow" positioning along the Y direction as well as scanning along the Y direction, as will be explained in more detail further below. The X-galvo and Y-galvo are also referred to as "slow" galvos.

The term "deflector" as used in the context of the present invention should be understood as any component capable of changing the direction of the laser beam or deflecting it so as to direct the beam in a predetermined direction. The deflectors can be in particular mirrors, reflective surfaces, electro- or acousto-optic modulators or deflectors and similar devices that can deflect the laser beam in a controllable manner.

The scanning lens 25 focuses the laser beam light on the surface to be marked, bringing the energy densities above threshold which enables marking on the surface by changing the colour, texture or light reflecting properties of the surface of the product to be marked.

The laser source 21 is a pulse laser source which allows for precise control of the laser pulse. The system may use a laser source that is able to produce a laser pulse at precise timing based on arbitrary sequences. This type of source is sometimes referenced as a pulse-on-demand source. This is in contrast to typical sources which may produce a constant frequency pulse train and do not allow for long arbitrary pauses in the pulsing of the source or do not support fast changing of pulse frequency.

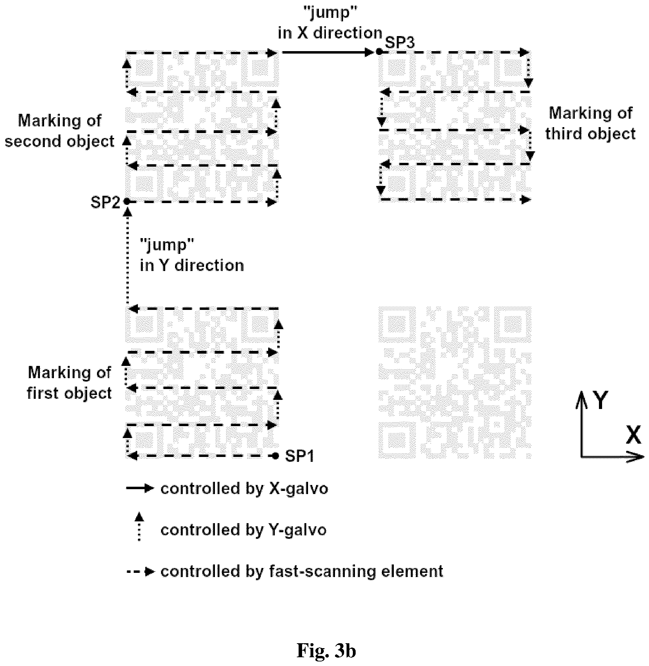

Fig. 3b shows an operation scheme followed by the system 20 according to the present invention from Fig. 3a for marking the content as shown in Fig. 1 on the surface of a product. The sequence of arrows in Fig. 3b illustrates, in a simplified and very schematic manner, consecutive movements of the incident laser beam over the product surface. X and Y directions of the surface to be marked are defined as horizontal and vertical directions, respectively (as seen in a direction perpendicular to the surface). Positioning of the laser beam along the X and Y directions is implemented by the X-galvo 23b and Y-galvo 24b, respectively. Fast scanning along the X direction is implemented by the resonant galvo 22b, while the "slow" scanning along the Y direction is implemented by the Y-galvo 24b.

Starting from the first code, i.e., the lower left QR code, the position of the incident laser beam is set in a starting position SP1 (bottom right corner of the first code, i.e., the first QR code) using the X-galvo 23b and the Y-galvo 24b. Next, marking with the laser is done line by line so that after each fast-scanning along the X direction with the laser beam guided by the resonant galvo 22b (as indicated by the dashed line), there is a shift in the Y direction by the Y-galvo 24b (as indicated by the dotted line), and marking is repeated along the X direction with the laser beam guided by the resonant galvo 22b, but in the reverse direction. The operation of the laser is synchronised with the operation of the galvos such that the laser beam is delivered for the spots to be marked and ceased for the spots which are not to be marked as well as during positioning (including "jumps"). The above sequence continues until the first QR code is completed. Thereafter, the Y-galvo 14b performs a "jump" in the Y direction to a starting point SP2 of the second code, i.e. next QR code to be marked. The explained process is repeated for the second QR code, and then, after a "jump" in the X direction to a starting point SP3 performed by the X-galvo 23b (as indicated by the solid line), also for the third QR code, and so on for one or more remaining codes. It is obvious that the number of lines shown in the figure is greatly reduced for simplicity and that in the actual implementation it will be necessary to perform a much larger number of sequences. It is also obvious that the presented sequence of movements is only exemplary and could be modified or optimised. What is important, however, in contrast to prior art systems such as the system 10 presented in Fig. 2a, the introduced fast-scanning deflector 22 (deflector controlled by the resonant galvo in this embodiment) significantly increases marking speed because it is most involved in scanning, while the "slow" galvos provide positioning and Y-scanning (Y-galvo) having less involvement in the entire process of product marking. As a result, less time is consumed when considering mass marking of products.

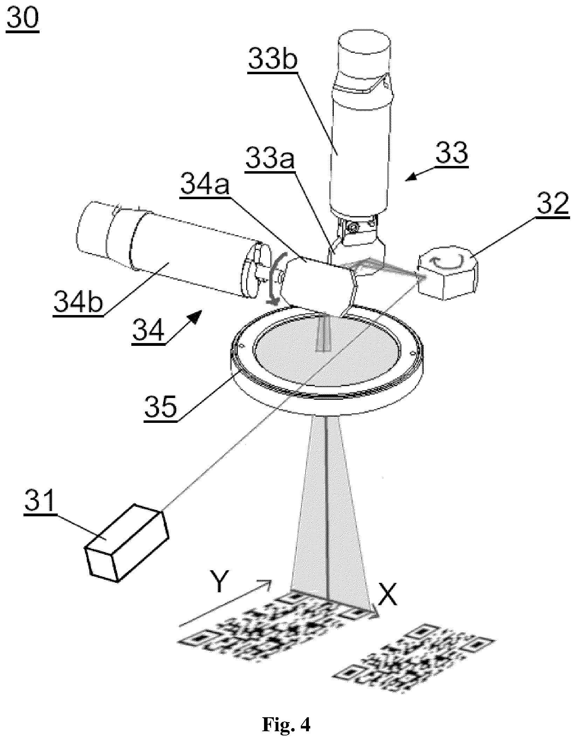

Fig. 4 shows a second embodiment of a system 30 for marking products with a laser according to the present invention. The system 30 according to the second embodiment in many aspects is similar to the first embodiment, i.e., it comprises a laser source 31, a first controllable deflector 33 composed of a first deflector 33a and an X-galvo 33b, a second controllable deflector 33 composed of a second deflector 34a and a Y-galvo 34b, and a scanning lens 35 which are basically the same as the corresponding components indicated by reference numerals 21, 23, 23a, 23b, 24, 24a, 24b, 25, respectively. The excess description will therefore be omitted for the overlapping scope.

The system 30 for marking products with a laser according to the second embodiment comprises a fast-scanning deflector in the form of a polygon scanner 32 which implements fast-scanning along the X direction. The polygon scanner 32 comprises multiple reflective surfaces arranged in a polygonal shape, for example a hexagon or an octagon. Each of the reflective surfaces is capable of reflecting a laser beam. When the polygon scanner 32 is rotated at a high speed by a motor (not shown in the figure), a scanning motion is created so that the laser beam produced by the laser source 31 is repeatedly swept along the X direction as a result of reflections of the laser beam from the subsequent reflective surfaces. As a consequence, and in contrast to the scheme presented in Fig. 3b, there is no reverse movement of the laser beam along the X direction in the next run, but for each subsequent reflective surface of the polygon scanner 32, the laser beam returns to the X direction start position shifted in Y direction by the Y-galvo 34b, and again progresses along the X direction in the same direction as previously to mark another line. In other respects, this process is analogous to that from Fig. 3b.

In order to provide the scanning effect, in the second embodiment of the invention depicted in Fig. 4, the polygon scanner 32 is arranged, as a part of the laser beam guidance system, in an appropriate spatial relationship with the laser source 31 and the first deflector 33a. This spatial relationship is such that the laser beam reflected from the reflecting surfaces of the polygon scanner 32 in the entire angular range is directed to the first deflector 33a. As in the case of the resonant galvo 22b from the first embodiment, there is a shift in the Y direction (implemented by the Y-galvo 34b) after each fast scan in the X direction performed by the polygon scanner 32, so that the product surface is marked line by line. Due to the nature of polygon scanners, the scanning direction and range will be always the same. Achievable scan frequency comes from the max rotational speed of the polygon scanner and number of facets on the rotating mirrors. The polygon scanner may be used with a fast scan position detector. This may be an encoder or other sensor operable to determine the position of the fast-scanning deflector. Preferably the fast scan position detector operates with a comparable resolution and/or speed performance to the polygon scanner. Non-limiting examples of polygon scanners suitable for use in the present invention include ball bearing polygon scanners, air bearing polygon scanners and other polygon scanner types obvious to a person skilled in the art. The polygon scanner is not limited to any specific number of facets or shapes as long as it can provide the required function. The polygon scanner may have an RPM of greater than 5,000; 10,000; 15,000; 20,000; 25,000, 30,000, 40,000 or 50,000. The polygon scanner may have an RPM not exceeding 100,000, 50,000 or 40,000. The polygon scanner may comprise 3, 4, 5, 6, 7, 8, 9, 10, 11, 12, 13, 14, 15, 20, 25, or 30 facets, or any range formed from any of these values.

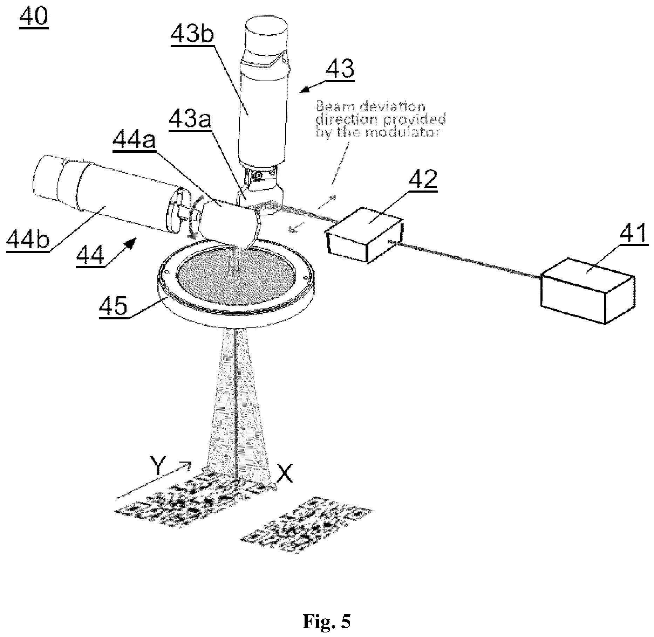

Fig. 5 shows a third embodiment of a system 40 for marking products with a laser according to the present invention. The system 40 according to the third embodiment in many aspects is similar to the first embodiment, i.e., it comprises a laser source 41, a first controllable deflector 43 composed of a first deflector 43a and an X-galvo 43b, a second controllable deflector 44 composed of a second deflector 44a and a Y-galvo 44b, and a scanning lens 45 which are basically the same as the corresponding components indicated by reference numerals 21, 23, 23a, 23b, 24a, 24b, 25, respectively, therefore for the sake of clarity only differences between the embodiments are explained, while for the remaining elements the reference should be made to the previous description.

The system 40 for marking products with a laser according to the third embodiment comprises a fast-scanning deflector in the form of an electro- or acousto-optic modulator 42 which implements fast-scanning along the X direction. An electro-optic modulator (or deflector) and an acousto-optic modulator (or deflector) are devices that can change or deflect the direction of laser beams using an electric field or acoustic signals applied to the material through which the laser beam is passed. Electro- or acousto-optic modulators can deflect a laser beam without the need of mechanical movement of any element. Because of this, electro- or acousto-optic modulator can change the deflection angle in an exceptionally fast. As a result of using the electro- or acousto-optic modulator or deflector 42, it is possible to provide precise spatial control of the laser beam. The electro-optic modulator (or deflector) or acousto-optic modulator (referred collectively herein as "modulator") may be operated with an electrical drive signal of constant frequency or variable frequency. In some embodiments, where the modulator is driven with a variable frequency, the laser source may be a constant frequency pulse laser. Thus, the modulator may receive a control signal from the control unit to direct the laser beam at each required location as a laser pulse is delivered at constant intervals. Alternatively, the modulator may be used with a variable pulse laser and the modulator operated at a constant frequency or variable frequency.

As depicted in Fig. 5, in the third embodiment of the invention, the electro- or acousto-optic modulator or deflector 42 is arranged, as a part of the laser beam guidance system, between the laser source 41 and the first deflector 43a such that the laser beam generated by the laser source 41 passes through it. The deflection angle of the deflected laser beam exiting from the electro- or acousto-optic modulator or deflector 42 is precisely adjusted by the electro- or acousto-optic modulator or deflector 42 such that a scanning motion along the X direction is created so that the laser beam projected on the surface of the product to be marked is repeatedly swept along the X direction of the surface. As in the case of the resonant galvo 22b from the first embodiment, there is a shift in the Y direction (implemented by the Y-galvo 44b) after each fast scan in the X direction performed by the electro- or acousto-optic modulator or deflector 42, so that the product surface is marked line by line. In this respect, the process is analogous to that shown in Fig. 3b.

The presented embodiments of the invention provide system arrangements enabling fast marking of products using a laser beam. As explained, the function of the fast-scanning deflector can be implemented using the resonant galvo 22b, the polygon scanner 32 or the electro- or acousto-optic modulator or deflector 42 appropriately arranged in the laser beam guidance system. One skilled in the art will be aware of other fast-scanning deflectors not explicitly mentioned here, but capable of performing the required function of fast scanning.

It should be noted that the system according to the present invention can also be used as a classical system similar to the one presented in Fig. 2a by simply deactivating the fast-scanning deflector so that it only serves as a static element reflecting or passing the laser beam in the system. This could be done by stopping the fast-scanning deflector or the polygon scanner in a predetermined position or by turning off modulation of the electro- or acousto-optic modulator and in such case the beam guiding function can be taken over completely by the first and second scanning deflectors. It is also possible for the system according to the present invention to work in a mixed operation mode, i.e., the operation of the system could be switched between a first mode in which the system operates with use of the fast-scanning deflector (as explained e.g. with reference to Fig. 3b) and a second mode in which the fast-scanning deflector is stopped and the system operates in a classic way using two standard galvoscanners (as explained e.g. with reference to Fig. 2b). Said first and second modes could be selected depending on the given requirements, for example with regard to marking types and characteristics so that the system can operate in an optimized way, e.g. in terms of marking speed.

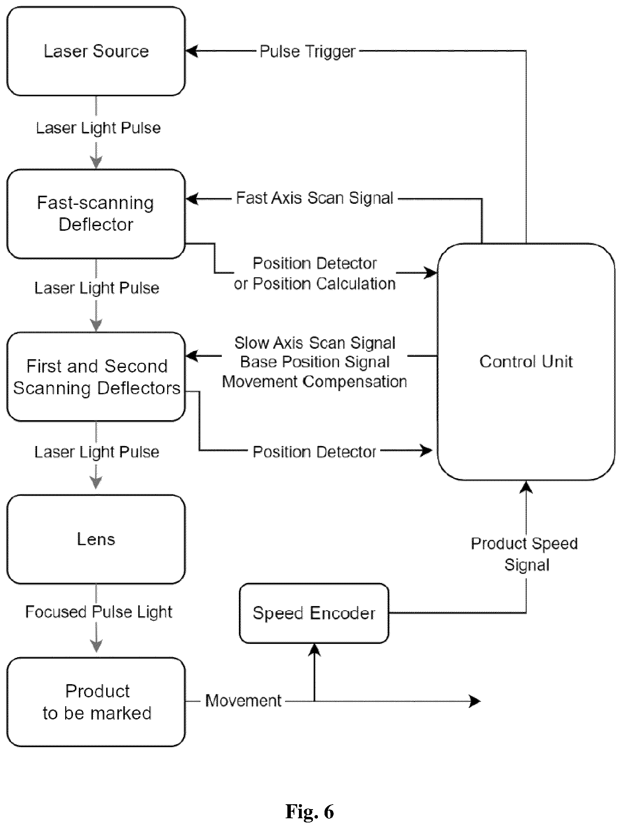

Fig. 6 shows a control scheme implemented by a control unit in the system according to the present invention. The control unit is connected to a laser source, a fast-scanning deflector, first and second scanning deflectors and a product movement sensor, e.g. a speed encoder in order to send control signals to and/or receive signals from these system components. The product movement sensor may be integrated into the control unit where the control unit controls product speed, or the control unit may receive input from a separate speed control unit. Based on predetermined instructions and taking into consideration received signals, the control unit controls the operation of the laser source, the fast-scanning deflector and the first and second scanning deflectors to produce a laser beam, direct it to a product to be marked, and guide it over the product surface according to a predetermined sequence, such as the sequence described with reference to Fig. 3b. The received signals may comprise position detection signals related to the current positions and/or current speed of the deflectors. Such position detection signals may be provided by a fast scan position detector associated with the fast-scanning deflector, and/or position detectors associated with the first and second scanning deflectors. The position detectors may comprise sensors to determine deflector position and provide a signal to the control unit. Alternatively, the position detection may be a function of the control unit for calculating deflector position. This may optionally be based on a signal from the deflectors themselves used to determine position by the control unit, or the control unit may determine deflector position based on the signals sent to the deflectors by the control unit. Alternatively, deflector position may be any combination of these.

Additionally or alternatively, position signals may be related to conveyor or product movement speed, and may be generated by a product movement sensor where the product is marked while moving, e.g. on a conveyor. For this latter case, the product movement sensor may directly detect movement of the product, or movement of the product via movement of the conveyor. The product movement sensor may generate a signal to the control unit. The control unit may generate a control signal to the first and/or second scanning deflector at least in part based on the signal from the product movement sensor. The product movement sensor may comprise a position or speed encoder associated with a conveyor, a light gate, photodiode, camera or other optical tracking means or any other sensor useable for tracking objects on a conveyor.

The laser source may represent one of the laser sources denoted as 21, 31 or 41 in Figs. 3a, 4, 5, respectively, the fast scanning deflector may represent one of the fast-scanning deflectors denoted as 22, 32 or 42 in Figs. 3a, 4, 5, respectively, and the first and second scanning deflectors may represent scanning deflectors denoted as 23, 24, 33, 34 or 43, 44 in Figs. 3a, 4, 5 respectively. Fig. 6 illustrates also a lens which may represent one of the lenses denoted as 25, 35, 45 in Figs. 3a, 4, 5, respectively.

After the process for marking the product is started (for example by manual start, a product sensor, an external programmable logic controller (PLC) etc.) the product position is tracked by a speed encoder mounted on the line conveying the product to be marked. Product position, which is a function of the speed encoder is used in calculation of the base position (e.g. SP1, SP2, SP3) on the product where the marking is to be placed. In case of static marking, the product does not move while the marking process is in progress and tracking is not required.

The control unit sends control signals denoted in Fig. 6 as "base position signal" to the first and second scanning deflectors in order to position them for creating an optical path for the laser beam directed to the base position of the product to be marked. Then, the control unit moves the Y-axis scanner (i.e. the Y-galvo/second scanning deflector) to bring the optical path for the laser beam to a starting point of a new line between X axis fast scans by sending a slow axis scan signal, and adjusts for product movement using signals received from the speed encoder. The first and second scanning deflectors (galvos with respective deflectors) provide position detection signals to the control unit which enable the control unit to confirm correct positioning of the scanning deflectors. It is also possible to omit position confirmation using the position detection signals if it is deemed not necessary for the process.

After said base position is achieved (and optionally confirmed by the position detection signals of the first and second scanning deflectors) the fast-scanning deflector commences to guide the laser beam on a line-by-line basis. The signal used for controlling fast scanning depends on the implementation. Position control may be enhanced by a fast scan position detector. The fast scan position detector may generate a position signal which is sent to the control unit, which may be used to control laser pulse generation and/or a fast-scanning deflector control signal. A fast scan position detector may, for example be an encoder. In the case of a polygon scanner, the encoder may be arranged to produce a signal that corresponds to mirror position, in particular rotary encoder may determine a rotary position of the polygon mirror. Alternatively or additionally, and applicable also to other implementations, a fast scan position detector for position control may comprise an additional laser beam (a non-limiting example includes a small diode laser, optionally in the mW power level), used with a 1D or 2D photo-detector array. The array and laser may be configured to determine fast-scanning deflector position by reflection of the laser beam by the fast-scanning deflector. In the case of electro- and acousto-optic deflectors, optical position detection can be realised with an additional laser beam of different wavelength, which would be deflected at a significantly different angle. The additional laser and photo-detector line can also be used for position control of a resonant galvo, which can be realised by using different positioning than the main laser beam, or optionally using the back side of the resonant galvo mirror. In the case of a resonant galvo, position detection may be performed with a synchronisation signal produced on every zero-crossing. The synchronisation signal can be used to accurately locate the deflector.

After correct position of the fast-scanning deflector is achieved, while maintaining correct positions of the first and second scanning deflectors, a trigger signal is sent to the laser source and a laser pulse is generated. Laser pulse needs to be short enough such that during the pulse generation the fast-scanning deflector does not significantly change position. This laser pulse is then propagated in sequence along the optical path created by the fast-scanning deflector and both first and second scanning deflectors and then focused by the focusing lens on the product to be marked where it marks the surface of the product. The system proceeds then to the next point on the product surface to be marked.

In case where the product to be marked is moved e.g. by a conveyor during the above-explained marking process, one or both first and second scanning deflectors can be used to compensate the product movement. In a simple scenario where the product movement direction is the same as the direction along which one of the first and second scanning deflectors operates, it is sufficient when the control unit reads the movement speed of the product, e.g. using the speed encoder, and uses control signals to transmit the calculated motion component to the corresponding scanning deflector. As a result, the scanning deflector moves synchronously with the product, thus compensating for product movement. In another scenario where the product movement direction is not aligned with direction along which any of the first and second scanning deflectors operates, the control unit can read the movement speed of the product and calculate corresponding motion components individually for each of the first and second scanning deflectors, such that their combined movement compensates the product movement.

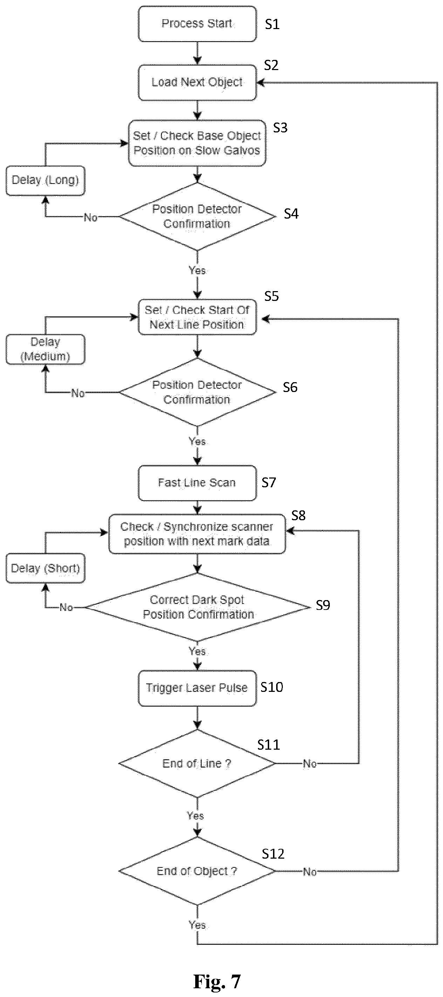

Fig. 7 shows a flowchart representing a process for controlling the operation of the system according to the present invention. The process comprises a series of successive steps S1 to S12 which are described in more detail below.

In step S1 the process is started. Process can be started by a product sensor, an external signal, a PLC control, or any other known mechanisms.

In step S2, a marking (e.g. a QR code) to be marked onto a product is loaded into the system. This may be in the form of line by line information on the points to be marked, for example. The marking process may include a single marking or multiple markings on a single product, or multiple markings across multiple products.

In step S3, a base position may be set by positioning the first and second scanning deflectors so that the laser beam is targeted at the intended start point on the product to be marked (e.g. SP1, SP2 etc).

In step S4, the correct positioning of the first and second deflectors may be confirmed using the position detectors. If position is correctly confirmed the system may proceed to next step. If the required position is not correctly confirmed in step S4, step S3 may be repeated after a delay and the position is checked again.

In steps S5-S6, position of a new line may be set using the Y galvo (i.e. the second scanning deflector) in the Y axis.

In step S6, the position of the new line may also be confirmed by position signal. This is automatically the correct position for the first line after step S3. If the required position is not correctly confirmed in step S6, step S5 may be repeated after a delay and the position is checked again.

In step S7 the fast scanning is started. If the fast-scanning deflector requires a wind-up period to bring the fast-scanning deflector up to speed, this may be done before this step starts. For electro-optic and acousto-optic modulators, the scan may start at this point.

In steps S8-S9, the fast-scanning deflector position is moved into the next spot that the system should mark. This is done based on the marking data loaded in step S2. For the sake of clarity, in this embodiment, a spot, or pixel to be marked is described as a black spot (in this example, marking black characters on a white background). Any white spot in the data is passed over. When the correct position is achieved, a laser pulse is generated to mark the spot, in step S10. If the required position is not confirmed in step S9, step S8 is repeated after a delay and the position is checked again.

In step S11 it is determined whether the process has reached the end of line. If the end of line has not been reached, steps S8-S11 are repeated by going back to step S8 until data shows end of line. Otherwise, the process proceeds to step S12.

In step S12 it is determined whether the process has reached the end of the marking. If it is determined in step S12 that the end of marking has not been reached, the line scan is repeated by going back to step S5, moving on, line by line, until data shows the end of marking. Otherwise, the marking is completed, and the process may proceed to step S2 to load new data and repeat steps S3-S12 until the process is completed, e.g. when all the marking is completed.

It will be understood that the present invention is not limited to the presented embodiments or examples but the scope of the invention is defined by the attached claims.

## Claims

1. A system for marking products with a laser, comprising:
a laser source (21, 31, 41) for generating a laser beam; and
a laser beam guidance system comprising a fast-scanning deflector (22, 32, 42), a first controllable deflector (23, 33, 43), a second controllable deflector (24, 34, 44) and at least one lens (25, 35, 45) which define an optical path for directing the laser beam generated by the laser source (21, 31, 41) to a product to be marked, and which guide the incident laser beam over the product surface along two directions (X, Y) thereof,
wherein:
the fast-scanning deflector (22, 32, 42) is configured for fast scanning the incident laser beam along a first direction (X);
the first controllable deflector (23, 33, 43) is configured for positioning the incident laser beam along the first direction (X);
the second controllable deflector (24, 34, 44) is configured for positioning and scanning the incident laser beam along a second direction (Y); and
a control unit for controlling the operation of the system components.

2. The system according to claim 1, wherein the first controllable deflector (23, 33, 43) and/or the second controllable deflector (24, 34, 44) is a galvo scanner.

3. The system according to claim 1 or 2, wherein the fast-scanning deflector is a resonant galvo scanner (22).

4. The system according to claim 1 or 2, wherein the fast-scanning deflector is a polygon scanner (32).

5. The system according to claim 1 or 2, wherein the fast-scanning deflector is an electro- or acousto-optic modulator (42).

6. The system according to any of the previous claims, wherein the laser source (21, 31, 41) is a pulse-on-demand laser.

7. The system according to claim 6, wherein the frequency of laser pulses generated by the pulse-on-demand laser is synchronised with deflection of the fast-scanning deflector (22, 32, 42) by the control unit.

8. The system according to any of the previous claims, wherein one or more products to be marked are transported on a conveyor, and wherein the first controllable deflector (23, 33, 43) and/or the second controllable deflector (24, 34, 44) is configured to compensate for the movement of the product on the conveyor along respective one or both axes (X, Y) and/or wherein system comprises a product movement sensor arranged to detect movement of the product on the conveyor.

9. The system according to any of the previous claims, wherein the fast-scanning deflector (22, 32, 42) comprises a fast scan position detector configured to provide a fast-scanning deflector position signal to the control unit and/or the first and/or second controllable deflector (23, 33, 43; 24, 34, 44) comprises a position detector to provide respective controllable deflector position signal(s) to the control unit.

10. The system according to claim 9, wherein the control unit is configured to control the frequency of laser pulses generated by the pulse-on-demand laser based on the fast-scanning deflector position signal and/or to generate control signals based on a position signal from one or more position detectors associated with the first and/or second controllable deflector (23, 33, 43; 24, 34, 44).

11. Use of the system according to any of claims 1 to 10, for the marking of products.

12. The use according to claim 11, wherein the products are marked with a 2D barcode or QR code.

13. A method of marking a product with a laser, the method comprising:
generating a laser beam from a laser source;
directing the laser beam to the product and guiding the incident laser beam over a product surface in two axes (X, Y) thereof with a laser beam guidance system comprising a fast-scanning deflector (22, 32, 42), a first controllable deflector (23, 33, 43), a second controllable deflector (24, 34, 44) and at least one lens (25, 35, 45) defining an optical path for the laser beam,
wherein guiding the laser beam comprises:
positioning the incident laser beam in a starting position along a first direction (X) with the first controllable deflector, and along a second direction (Y) with the second controllable deflector;
fast scanning the incident laser beam along the first direction (X) with the fast-scanning deflector a required number of times to mark the product, wherein the position of the incident laser beam being shifted along the second direction (Y) with the second controllable deflector for each subsequent fast scan, until a marking or part thereof is completed;
repeating the above steps for each subsequent marking or part thereof.

14. The method according to claim 13, wherein the laser beam is generated as a series of laser pulses.

15. The method according to claim 13 or 14, wherein the fast scanning with the fast-scanning deflector is performed with non-linear movement speed, optionally sinusoidal movement speed.

16. The method according to claim 14 and 15, wherein the frequency of pulses generated by the laser source is synchronised with the non-linear movement speed of the fast-scanning deflector.

17. The method according to claims 13 to 16, wherein the frequency of pulses generated by the laser source is synchronised with the non-linear movement speed of the fast-scanning deflector based on a fast-scanning deflector position signal.

18. The method according to claim 17, wherein the fast-scanning deflector position signal is generated by a fast scan position detector.

19. The method according to claims 13 to 18, wherein the method is for producing 2D barcodes or QR codes on a product.
